# EUROPEAN PATENT SPECIFICATION

(11) **EP 3 913 969 B1**
(45) Date of publication and mention of the grant of the patent: **17.07.2024**
(21) Application number: 20176152.5
(22) Date of filing: 22.05.2020
(51) Int. Cl.: H04W 28/08

(54) **METHOD FOR PROVIDING AN ENHANCED AND/OR MORE EFFICIENT BROADBAND ACCESS FUNCTIONALITY WITHIN A TELECOMMUNICATIONS NETWORK, USING MULTI PATH AND/OR MULTI ACCESS FUNCTIONALITY FOR AT LEAST ONE SPECIFIC TRAFFIC OR APPLICATION CATEGORY, TELECOMMUNICATIONS NETWORK, USER EQUIPMENT, ATSSS SERVER FUNCTIONALITY NODE OR INSTANCE OR PCF NODE OR INSTANCE, PROGRAM AND COMPUTER-READABLE MEDIUM**
VERFAHREN ZUR BEREITSTELLUNG EINER VERBESSERTEN UND/ODER EFFIZIENTEREN BREITBANDZUGANGSFUNKTIONALITÄT INNERHALB EINES TELEKOMMUNIKATIONSNETZWERKS UNTER VERWENDUNG VON MEHRPFAD- UND/ODER MEHRZUGANGSFUNKTIONALITÄT FÜR MINDESTENS EINE SPEZIFISCHE VERKEHRS- ODER ANWENDUNGSKATEGORIE, TELEKOMMUNIKATIONSNETZWERK, BENUTZERGERÄT, ATSSS-SERVER-FUNKTIONALITÄTSKNOTEN ODER -INSTANZ ODER PCF-KNOTEN ODER -INSTANZ, PROGRAMM UND COMPUTERLESBARES MEDIUM
PROCÉDÉ PERMETTANT DE FOURNIR UNE FONCTIONNALITÉ D'ACCÈS À LARGE BANDE AMÉLIORÉE ET/OU PLUS EFFICACE AU SEIN D'UN RÉSEAU DE TÉLÉCOMMUNICATIONS, EN UTILISANT UNE FONCTIONNALITÉ MULTIVOIE ET/OU MULTIACCÈS POUR AU MOINS UNE CATÉGORIE DE TRAFIC OU D'APPLICATION SPÉCIFIQUE, RÉSEAU DE TÉLÉCOMMUNICATIONS, ÉQUIPEMENT UTILISATEUR, NOEUD OU INSTANCE DE FONCTIONNALITÉ DE SERVEUR ATSSS OU NOEUD OU INSTANCE DE PCF, PROGRAMME ET SUPPORT LISIBLE PAR ORDINATEUR

(43) Date of publication of application: 24.11.2021
(73) Proprietor: Deutsche Telekom AG, 53113 Bonn (DE)
(72) Inventor: HAFEZ, Ahmed, 40591 Düsseldorf (DE)
(74) Representative: Schwöbel, Thilo K.

(56) References cited:
- EP-A1- 2 410 701
- EP-A1- 3 499 919
- WO-A1-2019/197016

## Description

### BACKGROUND

The present invention relates a method for providing an enhanced and/or more efficient broadband access functionality within a telecommunications network, using multi path and/or multi access functionality for at least one specific traffic or application category, wherein a user equipment is connected or registered to the telecommunications network, wherein the user equipment is enabled to achieve or to realize network access, to the telecommunications network, using a first access network or first network access, and/or a second access network or second network access.

Additionally, the present invention relates to a telecommunications network for providing an enhanced and/or more efficient broadband access functionality within the telecommunications network, using multi path and/or multi access functionality for at least one specific traffic or application category, wherein a user equipment is connected or registered to the telecommunications network, wherein the user equipment is enabled to achieve or to realize network access, to the telecommunications network, using a first access network or first network access, and/or a second access network or second network access.

Still additionally, the present invention relates to a user equipment user equipment as part of or connected or registered to a telecommunications network for providing an enhanced and/or more efficient broadband access functionality within the telecommunications network, using multi path and/or multi access functionality for at least one specific traffic or application category, wherein the user equipment is enabled to achieve or to realize network access, to the telecommunications network, using a first access network or first network access, and/or a second access network or second network access.

Additionally, the present invention relates to an ATSSS server functionality node or instance or to a PCF node or instance as part of a telecommunications network for providing an enhanced and/or more efficient broadband access functionality within the telecommunications network, using multi path and/or multi access functionality for at least one specific traffic or application category, wherein a user equipment is connected or registered to the telecommunications network, wherein the user equipment is enabled to achieve or to realize network access, to the telecommunications network, using a first access network or first network access, and/or a second access network or second network access.

Furthermore, the present invention relates to a program and to a computer-readable medium for providing an enhanced and/or more efficient broadband access functionality within a telecommunications network according to the inventive method.

The present invention generally relates to the area of providing network access to user equipments, customer premises equipments or home gateways, or client devices thereof, being connected to a telecommunications network. Typically, the client devices or the user equipments use a network connectivity provided by a customer premises equipment device or home gateway device that connects the client device to a telecommunications network. More generally, such network connectivity, or access, to a telecommunications network is typically required in order to provide internet-based services and applications to the user equipments, customer premises equipments or home gateway devices, or their client devices, in order to fulfill people's needs in areas such as communication, gaming, banking, shopping, information, education and entertainment.

Hence, high performance internet access solutions are an important prerequisite. In this respect, multi path access traffic steering, switching and splitting support can provide an enhancement to the performance of such internet access solutions. However conventionally, multipath access regarding a subscriber or customer is often either allowed - i.e. generally allowed - or not, and, hence, lacks a sufficient adaptability in different situations.

### SUMMARY

This invention is defined by the appended claims. An object of the present invention is to provide an effective and comparatively simple solution such that an enhanced and/or more efficient broadband access functionality within a telecommunications network, using multi path and/or multi access functionality, is possible to be realized within the telecommunications network.

The object of the present invention is achieved by a method for providing an enhanced and/or more efficient broadband access functionality within a telecommunications network, using multi path and/or multi access functionality for at least one specific traffic or application category, wherein a user equipment is connected or registered to the telecommunications network, wherein the user equipment is enabled to achieve or to realize network access, to the telecommunications network, using
-- a first access network or first network access, and/or
-- a second access network or second network access,
   wherein the first access network or first network access is or relates to an access network of or connected to or assigned to the telecommunications network, especially a mobile communication access network, and wherein the second access network or second network access is or relates to likewise an access network of or connected to or assigned to the telecommunications network, especially a fixed line access network,
   wherein the user equipment is enabled to exchange user plane traffic with the telecommunications network using at least one service data flow and/or using at least one quality-of-service flow, wherein in order to use multi path and/or multi access functionality for at least one specific traffic or application category, the method comprises the following steps:
-- in a first step, the user equipment receives a multi path policy indication, the multi path policy indication either indicating, or being used or interpreted, by the user equipment, as an indication to allow the user equipment to apply multi path and/or multi access functionality to at least a first traffic or application category regarding user plane traffic, and to deny the user equipment to apply multi path and/or multi access functionality to at least a second traffic or application category regarding user plane traffic,
-- in a second step, subsequent to the first step, the user equipment at least tries to apply multi path and/or multi access functionality regarding the first traffic or application category, and refrains from trying to apply multi path and/or multi access functionality regarding the second traffic or application category, wherein the multi path policy indication refers to at least one quality-of-service category among a plurality of different quality-of-service categories, wherein regarding a first quality-of-service category the user equipment is allowed to apply multi path and/or multi access functionality, and regarding a second quality-of- service category the user equipment is denied to apply multi path and/or multi access functionality.

It is thereby advantageously possible, according to the present invention, that a further granularity of deciding which traffic is eligible to multi path and/or multi access functionality, especially by defining traffic or application categories and synchronising them between service provider and the respective user equipment and/or the device manufacturer. Especially, this can advantageously be used to provide more suitably tailored offers to customers or subscribers of the telecommunications network or of the network provider, and also to provide more suitably tailored offers to content providers (especially in the form of application programming interfaces, APIs) being active within or using that telecommunications network.

The ATSSS functionality, access traffic steering, switching and splitting functionality, allows traffic steering across multiple accesses at a finer granularity than a PDU session, packet data unit session. Access traffic steering, switching and splitting introduces the notion of multi access PDU session, i.e. a PDU session for which the data traffic can be served over one or more concurrent network accesses, such as 3GPP access, trusted non-3GPP access and untrusted non-3GPP access. Typically, by means of using access traffic steering, switching and splitting, it is possible for the service provider and/or the telecommunications network to configure access traffic steering, switching and splitting rules - i.e. by means of applying and/or by means of transmitting such rules, via the telecommunications network which a user equipment is connected or registered to. These access traffic steering, switching and splitting rules determine how a user equipment should use the network accesses available, especially the available 3GPP network access(es) and the available Non-3GPP network access(es), especially with respect to uplink traffic. For downlink traffic, the core network of the telecommunications network, especially the 5G core network, typically provides rules to the user plane function determining which of the access networks available should be used for which traffic flow (or service data flow and/or quality-of-service flow).

According to the present invention, a user equipment is connected or registered to the telecommunications network, and the user equipment is enabled to achieve or to realize network access, to the telecommunications network, using a first access network or first network access, and/or a second access network or second network access. Often, one of these network accesses are prioritized, i.e. the user equipment either uses one network access only (e.g. the first network access or the second network access; i.e. at a first point in time (or during a first time interval) and/or regarding a specific service data flow and/or quality-of-service flow), or the user equipment uses both the network accesses, or even more than two network accesses (i.e. both the first and the second network access; at a second point in time (or during a second time interval) and/or regarding another specific service data flow and/or quality-of-service flow).

Typically according to the present invention, the first access network or first network access is or relates to an access network of or connected to or assigned to the telecommunications network, especially a mobile communication access network, and the second access network or second network access is or relates to likewise an access network of or connected to or assigned to the telecommunications network, especially using a fixed line access network; often, the user equipment is able to be connected to such a fixed line access network via or using a wireless local area network (Wifi or W-Lan) access.

According to the present invention, the user equipment is enabled to exchange user plane traffic with the telecommunications network using at least one service data flow and/or using at least one quality-of-service flow, and in order to use multi path and/or multi access functionality for at least one specific traffic or application category, the user equipment receives a multi path policy indication and applies (or at least tries to apply) multi path and/or multi access functionality regarding the allowed traffic or application category, and refrains from applying (or from trying to apply) multi path and/or multi access functionality regarding the non-allowed traffic or application category.
In this respect according to the present invention, the multi path policy indication either indicates (or it is used or interpreted, by the user equipment, as an indication) to allow the user equipment to apply multi path and/or multi access functionality to at least a first traffic or application category regarding user plane traffic, and to deny the user equipment to apply multi path and/or multi access functionality to at least a second traffic or application category regarding user plane traffic. I.e. as a consequence of the user equipment receiving the user equipment the multi path policy indication, the user equipment applies (or at least tries to apply) multi path and/or multi access functionality regarding the first traffic or application category, and does not apply (or refrains from trying to apply) multi path and/or multi access functionality regarding the second traffic or application category.
Thereby, it is advantageously possible to provide an enhanced and/or more efficient broadband access functionality within the telecommunications network using multi path and/or multi access functionality for at least one specific traffic or application category and not for other traffic or application categories.

According to the present invention, in the ATSSS procedure, an information "Allowed Service Categories to use multi path" (i.e. the multi path policy indication) is added to the information exchange from the service provider (or the telecommunications network) to the considered device or user equipment. This information helps to provide a more detailed definition of what the customer (or user equipment) is allowed to use multi path for, hence it is possible to offer multi path functionality for specific services in a targeted manner (i.e. only for those specific services, and not for other services) to different consumer or customer groups. One example in this respect is related to gaming; according to the present invention, it is possible that, e.g., a prepaid customer with a limited tariff is offered gaming as a separately paid option, with multi path functionality for this traffic or application category, i.e. multi path functionality is allowed for gaming (related applications and/or traffic) but not for any other category, i.e. traffic or application category. Additionally or altenatively, all zero rated (traffic or application) categories (regarding the considered customer) could be offered multi path on top, but not for all (other (non zero rated) traffic or application categories). Thereby it is advantageously possible according to the present invention to provide more granularity to offer the multi path functionality to a higher share of customers.
This is in contrast to the conventionally implemented multi path functionality within a telecommunications network or regarding a user or customer of the telecommunications network: Conventionally, multi path functionality is either switched on (globally for a considered subscriber or customer, i.e. regarding essentially all service categories or applications (and/or traffic or application categories)), or off (i.e. no traffic or application category is allowed to use multi path functionality).

According to a preferred embodiment of the present invention, the multi path policy indication comprises a reference to the at least one first traffic or application category regarding user plane traffic, and lacks a reference to the at least one second traffic or application category regarding user plane traffic, or
wherein the multi path policy indication comprises a reference to the at least one second traffic or application category regarding user plane traffic, and lacks a reference to the at least one first traffic or application category regarding user plane traffic.

It is thereby advantageously possible to convey - by means of the multi path policy indication - all necessary pieces of information to the user equipment in order for the user equipment to apply the correct multi path policy even though the multi path policy indication, properly spoken, does not explicitly comprise all these different pieces of information.

According to a further preferred embodiment of the present invention, the multi path policy indication comprises at least one application identification information, the at least one application identification information especially being related to one or a plurality of applications possible to be used on the user equipment, wherein especially the application identification information refers either to the at least one first traffic or application category regarding user plane traffic, or to the at least one second traffic or application category regarding user plane traffic.

By means of the at least one application identity information, it is advantageously possible to apply an even amore fine-grained control regarding the intended multi path policy, especially by means of the at least one application identification information being related to one or a plurality of applications possible to be used on the user equipment. Thereby, the application identification information might refer either to the at least one first traffic or application category regarding user plane traffic (i.e. the one or ones allowed for the respective user equipment), or to the at least one second traffic or application category regarding user plane traffic (i.e. the one or ones denied for the respective user equipment); altenatively, it is also possible according to the present invention that the application identification information refers to both the first and second traffic or application category, or a first part of the application identification information refers to the first traffic or application category, and a second part of the application identification information refers to the second traffic or application category.

According to a further preferred embodiment of the present invention, the multi path policy indication refers to at least one quality-of-service category among a plurality of different quality-of-service categories, especially 3GPP quality-of-service categories, wherein especially regarding a first quality-of-service category the user equipment is allowed to apply multi path and/or multi access functionality, and/or regarding a second quality-of-service category the user equipment is denied to apply multi path and/or multi access functionality.

Thereby, it is advantageously possible to easily implement the concept of controlling the application of multi path functionality by different user equipment differently and to build this functionality upon an established categorization of traffic, especially user plane traffic.

According to a further preferred embodiment of the present invention, the user equipment is a customer premises equipment or a home gateway device, the user equipment serving at least one client device connected to the user equipment.

By means of the user equipment being a customer premises equipment or home gateway device, it is advantageously possible that a network operator - often providing the customer premises equipment or home gateway device to their customers or subscribers - is involved in properly applying the inventive concept of controlling the application of multi path functionality by different user equipment differently.

According to still a further embodiment of the present invention, the telecommunications network comprises an ATSSS, access traffic steering, splitting and switching, server functionality node or instance, wherein the ATSSS server functionality node or instance transmits the multi path policy indication to the user equipment as part of at least one corresponding message.

It is thereby comparatively easily possible to effectively implement the inventive concept and especially the inventive method according to the present invention.

According to still a further embodiment of the present invention, the telecommunications network comprises a PCF, policy control function, node or instance, wherein - in case that the user equipment tries to apply multi path and/or multi access functionality regarding user plane traffic, using at least a further message - the ATSSS server functionality node or instance receives at least an information regarding the use of multi path and/or multi access functionality by the user equipment, and transmits a corresponding further information to the PCF node or instance.

It is thereby comparatively easily possible to effectively implement the inventive concept and especially the inventive method according to the present invention.

According to a further preferred embodiment of the present invention, by means of the PCF node or instance, it is decided whether the use of multi path and/or multi access functionality regarding user plane traffic, requested by the user equipment, is allowed or not, wherein regarding this decision the same policy as comprised in the multi path policy indication is applied to allow or to deny multi path and/or multi access functionality regarding user plane traffic with respect to the first traffic or application category and/or with respect to the second traffic or application category.

It is thereby comparatively easily possible to effectively implement the inventive concept and especially the inventive method according to the present invention.

The present invention furthermore also relates to a system or a telecommunications network for providing an enhanced and/or more efficient broadband access functionality within the telecommunications network, using multi path and/or multi access functionality for at least one specific traffic or application category, wherein a user equipment is connected or registered to the telecommunications network, wherein the user equipment is enabled to achieve or to realize network access, to the telecommunications network, using
-- a first access network or first network access, and/or
-- a second access network or second network access,
   wherein the first access network or first network access is or relates to an access network of or connected to or assigned to the telecommunications network, especially a mobile communication access network, and wherein the second access network or second network access is or relates to likewise an access network of or connected to or assigned to the telecommunications network, especially a fixed line access network,
   wherein the user equipment is enabled to exchange user plane traffic with the telecommunications network using at least one service data flow and/or using at least one quality-of-service flow, wherein in order to use multi path and/or multi access functionality for at least one specific traffic or application category, the system or telecommunications network is configured such that:
      -- the user equipment receives a multi path policy indication (from the telecommunications network, i.e. the telecommunications network transmits the multi path policy indication), the multi path policy indication either indicating, or being used or interpreted, by the user equipment, as an indication to allow the user equipment to apply multi path and/or multi access functionality to at least a first traffic or application category regarding user plane traffic, and to deny the user equipment to apply multi path and/or multi access functionality to at least a second traffic or application category regarding user plane traffic,
      -- the user equipment at least tries to apply multi path and/or multi access functionality regarding the first traffic or application category, and refrains from trying to apply multi path and/or multi access functionality regarding the second traffic or application category, wherein the multi path policy indication refers to at least one quality-of-service category among a plurality of different quality-of-service categories, wherein regarding a first quality-of-service category the user equipment is allowed to apply multi path and/or multi access functionality, and regarding a second quality-of- service category the user equipment is denied to apply multi path and/or multi access functionality.

Thereby, it is advantageously possible, according to the present invention, that a higher degree of granularity is possible to be realized in deciding which traffic is eligible to multi path and/or multi access functionality, especially by defining traffic or application categories. Hence more suitably tailored offers are possible to be provided to customers or subscribers of the telecommunications network or of the network provider.

Furthermore, the present invention relates to a user equipment as part of or connected or registered to a telecommunications network for providing an enhanced and/or more efficient broadband access functionality within the telecommunications network, using multi path and/or multi access functionality for at least one specific traffic or application category, wherein the user equipment is enabled to achieve or to realize network access, to the telecommunications network, using
-- a first access network or first network access, and/or
-- a second access network or second network access,
   wherein the first access network or first network access is or relates to an access network of or connected to or assigned to the telecommunications network, especially a mobile communication access network, and wherein the second access network or second network access is or relates to likewise an access network of or connected to or assigned to the telecommunications network, especially a fixed line access network,
   wherein the user equipment is enabled to exchange user plane traffic with the telecommunications network using at least one service data flow and/or using at least one quality-of-service flow, wherein in order to use multi path and/or multi access functionality for at least one specific traffic or application category, the telecommunications network is configured such that:
      -- the user equipment receives a multi path policy indication, the multi path policy indication either indicating, or being used or interpreted, by the user equipment, as an indication to allow the user equipment to apply multi path and/or multi access functionality to at least a first traffic or application category regarding user plane traffic, and to deny the user equipment to apply multi path and/or multi access functionality to at least a second traffic or application category regarding user plane traffic,
      -- the user equipment at least tries to apply multi path and/or multi access functionality regarding the first traffic or application category, and refrains from trying to apply multi path and/or multi access functionality regarding the second traffic or application category, wherein the multi path policy indication refers to at least one quality-of-service category among a plurality of different quality-of-service categories, wherein regarding a first quality-of-service category the user equipment is allowed to apply multi path and/or multi access functionality, and regarding a second quality-of- service category the user equipment is denied to apply multi path and/or multi access functionality.

Thereby, it is advantageously possible, according to the present invention, that a higher degree of granularity is possible to be realized in deciding which traffic is eligible to multi path and/or multi access functionality, especially by defining traffic or application categories. Hence more suitably tailored offers are possible to be provided to customers or subscribers of the telecommunications network or of the network provider.

The present invention furthermore also relates to an ATSSS server functionality node or instance or to a PCF node or instance as part of a telecommunications network for providing an enhanced and/or more efficient broadband access functionality within the telecommunications network, using multi path and/or multi access functionality for at least one specific traffic or application category, wherein a user equipment is connected or registered to the telecommunications network, wherein the user equipment is enabled to achieve or to realize network access, to the telecommunications network, using
-- a first access network or first network access, and/or
-- a second access network or second network access,

wherein the first access network or first network access is or relates to an access network of or connected to or assigned to the telecommunications network, especially a mobile communication access network, and wherein the second access network or second network access is or relates to likewise an access network of or connected to or assigned to the telecommunications network, especially a fixed line access network,
wherein the user equipment is enabled to exchange user plane traffic with the telecommunications network using at least one service data flow and/or using at least one quality-of-service flow, wherein in order to use multi path and/or multi access functionality for at least one specific traffic or application category, the ATSSS server functionality node or instance or the PCF node or instance is configured such that:
   -- the ATSSS server functionality node or instance transmits a multi path policy indication to the user equipment, the multi path policy indication either indicating, or being used or interpreted, by the user equipment, as an indication to allow the user equipment to apply multi path and/or multi access functionality to at least a first traffic or application category regarding user plane traffic, and to deny the user equipment to apply multi path and/or multi access functionality to at least a second traffic or application category regarding user plane traffic,
   -- the user equipment at least tries to apply multi path and/or multi access functionality regarding the first traffic or application category, and refrains from trying to apply multi path and/or multi access functionality regarding the second traffic or application category, wherein the multi path policy indication refers to at least one quality-of-service category among a plurality of different quality-of-service categories, wherein regarding a first quality-of-service category the user equipment is allowed to apply multi path and/or multi access functionality, and regarding a second quality-of- service category the user equipment is denied to apply multi path and/or multi access functionality.

Thereby, it is advantageously possible, according to the present invention, that a higher degree of granularity is possible to be realized in deciding which traffic is eligible to multi path and/or multi access functionality, especially by defining traffic or application categories. Hence more suitably tailored offers are possible to be provided to customers or subscribers of the telecommunications network or of the network provider.

Additionally, the present invention relates to a program comprising a computer readable program code which, when executed on a computer and/or on a user equipment and/or on an ATSSS server functionality node or instance and/or on a PCF node or instance, or in part on the user equipment and/or in part on the ATSSS server functionality node or instance and/or in part on the PCF node or instance, causes the computer and/or the user equipment and/or the ATSSS server functionality node or instance and/or the PCF node or instance to perform the inventive method.

Still additionally, the present invention relates to a computer-readable medium comprising instructions which when executed on a computer and/or on a orchestrator node or functionality and/or on a software defined network or policy node or functionality, or in part on the orchestrator node or functionality and in part on software defined network or policy node or functionality, causes the computer and/or the orchestrator node or functionality and/or the software defined network or policy node or functionality to perform the inventive method.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

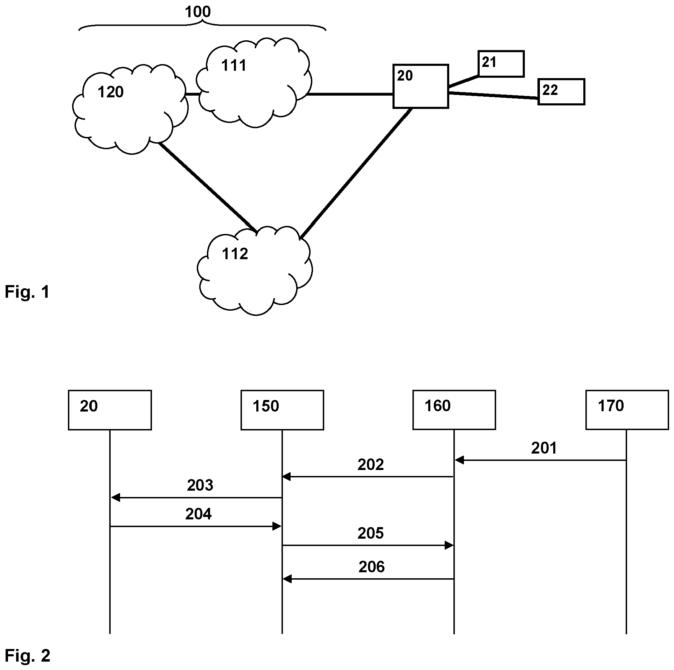

**Figure 1** schematically illustrates a telecommunications network or a system according to the present invention, comprising a first access network (or first network access), a second access network (or second network access), and a user equipment in the form of a home gateway device or customer premises equipment with a plurality of client devices connected thereto.
**Figure 2** schematically illustrates a communication diagram between the user equipment and the telecommunications network, especially its ATSSS, access traffic steering, splitting and switching, server functionality node or instance, its PCF, policy control function, node or instance, and its provisioning server node or instance.

### DETAILED DESCRIPTION

The present invention will be described with respect to particular embodiments and with reference to certain drawings but the invention is not limited thereto but only by the claims. The drawings described are only schematic and are nonlimiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

In Figure 1, a telecommunications network 100 or system according to the present invention is schematically shown, comprising a first access network (or first network access) 111, a second access network (or second network access) 112. The first and second network access 111, 112 are shown to be part of the telecommunications network 100. However, the first and second access networks or network accesses 111, 112 might also not be part of the telecommunications network 100 but only be connected to or assigned to the telecommunications network 100. The telecommunications network 100 typically comprises a core network 120, especially a 5G core network. The first access network 111 or first network access 111 is or relates to an access network of or connected to or assigned to the telecommunications network 100, especially a mobile communication access network, and the second access network 112 or second network access 112 is or relates to likewise an access network of or connected to or assigned to the telecommunications network 100, especially a fixed line access network.

Furthermore, a user equipment 20 in the form of a home gateway device or customer premises equipment is schematically shown in Figure 1, as part of the system or of the telecommunications network 100 or connected to the telecommunications network 100. A plurality of client devices 21, 22 are shown being connected to the user equipment 20, hence corresponding to the illustrated case of the user equipment 20 being a home gateway device or a customer premises equipment. Alternatively to the user equipment 20 being a home gateway device or a customer premises equipment, the user equipment 20 can also be a mobile device user equipment, such as, e.g., a telephone device or a smart phone device, a tablet device or another computer device. Also in this case, it is, of course, possible that client devices 21, 22 are connected to the user equipment 20, i.e. using the internet connectivity of the user equipment 20, such as, e.g., a smart watch or another device such as a gaming device or the like.

In Figure 2, a communication diagram between the user equipment 20 and the telecommunications network 100, or components or nodes of its core network 120 are schematically illustrated. These components or nodes of the core network 120 of the telecommunications network 100 are especially its ATSSS, access traffic steering, splitting and switching, server functionality node or instance 150, its PCF, policy control function, node or instance b160, and its provisioning server node or instance 170.

According to the present invention, a method for providing an enhanced and/or more efficient broadband access functionality within a telecommunications network is provided, using multi path and/or multi access functionality for at least one specific traffic or application category.
The user equipment 20 is connected to or registered to the telecommunications network 100, wherein the user equipment 20 is enabled to achieve or to realize network access, to the telecommunications network 100, using
-- a first access network 111 or first network access 111, and/or
-- a second access network 112 or second network access 112,
   wherein the first access network or first network access 111 is or relates to an access network of or connected to or assigned to the telecommunications network 100, especially a mobile communication access network, and wherein the second access network or second network access 112 is or relates to likewise an access network of or connected to or assigned to the telecommunications network 100, especially using a fixed line access network.
   The user equipment 20 is enabled to exchange user plane traffic with the telecommunications network 100 using at least one service data flow and/or using at least one quality-of-service flow, wherein in order to use multi path and/or multi access functionality for at least one specific traffic or application category, the inventive method comprises the steps of:
      -- in a first step, the user equipment 20 receives a multi path policy indication, the multi path policy indication either indicating, or being used or interpreted, by the user equipment, as an indication to allow the user equipment to apply multi path and/or multi access functionality to at least a first traffic or application category regarding user plane traffic, and to deny the user equipment 20 to apply multi path and/or multi access functionality to at least a second traffic or application category regarding user plane traffic,
      -- in a second step, subsequent to the first step, the user equipment 20 at least tries to apply multi path and/or multi access functionality regarding the first traffic or application category, and refrains from trying to apply multi path and/or multi access functionality regarding the second traffic or application category.

According to a first variant of the present invention, the multi path policy indication typically indicates to the user equipment 20 the possibility to apply multi path and/or multi access functionality (explicitly) only for or regarding the first traffic or application category regarding user plane traffic (or a plurality of first traffic or application categories), i.e. the second traffic or application category (or plurality of second traffic or application categories) (for which the user equipment 20 is denied to apply multi path and/or multi access functionality) is not (explicitly) transmitted as part of the multi path policy indication (i.e. the multi path policy indication lacks such a reference to the second traffic or application category/categories); however, the user equipment 20 acts accordingly, i.e. the user equipment 20 interprets the multi path policy indication accordingly (i.e. to deny multi path functionality regarding the second traffic or application category/categories. According to another variant of the present invention, also the opposite is possible, i.e. that the multi path policy indication indicates to the user equipment 20 the impossibility to apply multi path and/or multi access functionality (explicitly) only for or regarding the second traffic or application category regarding user plane traffic (or a plurality of second traffic or application categories), i.e. the first traffic or application category (or plurality of first traffic or application categories) (for which the user equipment 20 is allowed to apply multi path and/or multi access functionality) is not (explicitly) transmitted as part of the multi path policy indication (i.e. the multi path policy indication lacks such a reference to the first traffic or application category/categories); however, the user equipment 20 acts accordingly, i.e. the user equipment 20 interprets the multi path policy indication accordingly (i.e. to allow multi path functionality regarding the first traffic or application category/categories.

According to the present invention, in the ATSSS procedure, an information "Allowed Service Categories to use multi path" (i.e. the multi path policy indication) is added to the information exchange from the service provider (or the telecommunications network 100) to the considered device or user equipment 20. This information helps to provide a more detailed definition of what the customer (or user equipment) is allowed to use multi path for, hence it is possible to offer multi path functionality for specific services in a targeted manner (i.e. only for those specific services, and not for other services) to different consumer or customer groups.

Hence, according to the present invention, a customer (i.e. a user equipment 20) is provisioned for multi path (i.e. to use or to apply multi path and/or multi access functionality for specific categories, such as, e.g., video and/or gaming. In a first processing step 201, the provisioning system 170 writes this information in the PCF database of the PCF, policy control function, node or instance 160 for this particular customer (or user equipment 20). In a second processing step 202, the PCF (or the PCF node or instance 160) sends the policy to the ATSSS, access traffic steering, splitting and switching, server functionality node or instance 150. The ATSSS server functionality node or instance 150 uses this policy in setting up the Access Traffic Steering splitting and Switching policy with the device (or user equipment 20, e.g. a smartphone or customer premises equipment). In a third processing step 203, the ATSSS server (ATSSS server functionality node or instance 150) sends the policy to the user equipment 20 (or to the device). This is corresponds to the transmission of the multi path policy indication from the telecommunications network 100 (i.e. from the ATSSS server functionality node or instance 150) to the user equipment 20 in or during the first step according to the inventive method; the multi path policy indication comprises at least an implicit indication regarding the list of application categories that are allowed for multi path functionality. Especially this is realized by means of an additional information element or element as part of the transmission of the multi path policy. The user equipment 20 then uses this information (i.e. the differentiation between the first traffic or application category (allowed) and the second first traffic or application category (denied)) or these categories to allow or deny applications from using multi path towards the telecommunications network 100 in a furth processing step 204. The telecommunications network 100 uses (in a fifth processing step 205 and in a sixth processing step 206) the same multi path policy to allow or to deny the use of multi path to the user equipment 20.

According to the present invention, the different application categories (i.e. the first traffic or application category being allowed, and the second first traffic or application category being denied) need to be defined. According to one alternative possibility, the multi path policy indication comprises at least one application identification information for defining applications that are allowed to use multi path functionality and/or that are denied to use multi path functionality, i.e. the at least one application identification information is especially related to one or a plurality of applications possible to be used on the user equipment 20, wherein especially the application identification information refers either to the at least one first traffic or application category regarding user plane traffic, or to the at least one second traffic or application category regarding user plane traffic. Especially, it is preferred according to the present invention that the multi path policy indication refers to at least one quality-of-service category among a plurality of different quality-of-service categories, especially 3GPP quality-of-service categories, wherein especially regarding a first quality-of-service category the user equipment 20 is allowed to apply multi path and/or multi access functionality, and/or regarding a second quality-of-service category the user equipment 20 is denied to apply multi path and/or multi access functionality. This especially provides the advantage that there are not too many different traffic or application category regarding user plane traffic to be differentiated, and, furthermore, it provides the advantage that there is at least some relationship to quality-of-service categories in 3GPP. To use directly the 3GPP quality-of-service categories and their definition simplifies the needed alignment across different parties (such as network operators, service providers and the like). Hence, it is preferably possible according to the present invention to either allow or deny one or more of the following quality-of-service classes (according to 3GPP TS 23.203), wherein first quality class identifier (QCI), then the resource type (guaranteed bit rate GBR or non-GBR), and thereafter the priority are given:

| | | | | | | | | |
|---|---|---|---|---|---|---|---|---|
| 1 | GBR | 2; | 2 | GBR | 4; | 3 | GBR | 3; |
| 4 | GBR | 5; | 65 | GBR | 0.7; | 66 | GBR | 2; |
| 75 | GBR | 2.5; | 5 | non-GBR | 1; | 6 | non-GBR | 6; |
| 7 | non-GBR | 7; | 8 | non-GBR | 8; | 9 | non-GBR | 9; |
| 69 | non-GBR | 0.5; | 70 | non-GBR | 5.5; | 79 | non-GBR | 6.5; |
| 80 | non-GBR | 6.8; | 82 | GBR | 1.9; | 83 | GBR | 2.2; |
| 84 | GBR | 2.4; | 85 | GBR | 2.1; | | | |

## Claims

1. Method for providing an enhanced and/or more efficient broadband access functionality within a telecommunications network (100), using multi path and/or multi access functionality for at least one specific traffic or application category, wherein a user equipment (20) is connected or registered to the telecommunications network (100), wherein the user equipment (20) is enabled to achieve or to realize network access, to the telecommunications network (100), using
-- a first access network (111) or first network access, and/or
-- a second access network (112) or second network access,
wherein the first access network (111) or first network access is or relates to an access network of or connected to or assigned to the telecommunications network (100), especially a mobile communication access network, and wherein the second access network (112) or second network access is or relates to likewise an access network of or connected to or assigned to the telecommunications network (100), especially a fixed line access network,
wherein the user equipment (20) is enabled to exchange user plane traffic with the telecommunications network (100) using at least one service data flow and/or using at least one quality-of-service flow, wherein in order to use multi path and/or multi access functionality for at least one specific traffic or application category, the method comprises the following steps:
-- in a first step, the user equipment (20) receives a multi path policy indication, the multi path policy indication either indicating, or being used or interpreted, by the user equipment (20), as an indication to allow the user equipment (20) to apply multi path and/or multi access functionality to at least a first traffic or application category regarding user plane traffic, and to deny the user equipment (20) to apply multi path and/or multi access functionality to at least a second traffic or application category regarding user plane traffic,
-- in a second step, subsequent to the first step, the user equipment (20) at least tries to apply multi path and/or multi access functionality regarding the first traffic or application category, and refrains from trying to apply multi path and/or multi access functionality regarding the second traffic or application category,
wherein the multi path policy indication refers to at least one quality-of-service category among a plurality of different quality-of-service categories, wherein regarding a first quality-of-service category the user equipment (20) is allowed to apply multi path and/or multi access functionality, and regarding a second quality-of-service category the user equipment (20) is denied to apply multi path and/or multi access functionality.

2. Method according to claim 1, wherein the multi path policy indication comprises a reference to the at least one first traffic or application category regarding user plane traffic, and lacks a reference to the at least one second traffic or application category regarding user plane traffic, or
wherein the multi path policy indication comprises a reference to the at least one second traffic or application category regarding user plane traffic, and lacks a reference to the at least one first traffic or application category regarding user plane traffic.

3. Method according to one of the preceding claims, wherein the multi path policy indication comprises at least one application identification information, the at least one application identification information especially being related to one or a plurality of applications possible to be used on the user equipment (20), wherein especially the application identification information refers either to the at least one first traffic or application category regarding user plane traffic, or to the at least one second traffic or application category regarding user plane traffic.

4. Method according to one of the preceding claims, wherein the plurality of different quality-of-service categories are 3GPP quality-of-service categories.

5. Method according to one of the preceding claims, wherein the user equipment (20) is a customer premises equipment or a home gateway device, the user equipment (20) serving at least one client device (21, 22) connected to the user equipment (20).

6. Method according to one of the preceding claims, wherein the telecommunications network (100) comprises an ATSSS, access traffic steering, splitting and switching, server functionality node or instance (150), wherein the ATSSS server functionality node or instance (150) transmits the multi path policy indication to the user equipment (20) as part of at least one corresponding message (203).

7. Method according to one of the preceding claims, wherein the telecommunications network (100) comprises a PCF, policy control function, node or instance (160), wherein - in case that the user equipment (20) tries to apply multi path and/or multi access functionality regarding user plane traffic, using at least a further message (204) - the ATSSS server functionality node or instance (150) receives at least an information regarding the use of multi path and/or multi access functionality by the user equipment (20), and transmits a corresponding further information (205) to the PCF node or instance (160).

8. Method according to one of the preceding claims, wherein, by means of the PCF node or instance (160), it is decided whether the use of multi path and/or multi access functionality regarding user plane traffic, requested by the user equipment (20), is allowed or not, wherein regarding this decision the same policy as comprised in the multi path policy indication is applied to allow or to deny multi path and/or multi access functionality regarding user plane traffic with respect to the first traffic or application category and/or with respect to the second traffic or application category.

9. Telecommunications network (100) for providing an enhanced and/or more efficient broadband access functionality within the telecommunications network (100), using multi path and/or multi access functionality for at least one specific traffic or application category, wherein a user equipment (20) is connected or registered to the telecommunications network (100), wherein the user equipment (20) is enabled to achieve or to realize network access, to the telecommunications network (100), using
-- a first access network (111) or first network access, and/or
-- a second access network (112) or second network access,
wherein the first access network (111) or first network access is or relates to an access network of or connected to or assigned to the telecommunications network (100), especially a mobile communication access network, and wherein the second access network (112) or second network access is or relates to likewise an access network of or connected to or assigned to the telecommunications network (100), especially a fixed line access network,
wherein the user equipment (20) is enabled to exchange user plane traffic with the telecommunications network (100) using at least one service data flow and/or using at least one quality-of-service flow, wherein in order to use multi path and/or multi access functionality for at least one specific traffic or application category, the telecommunications network (100) is configured such that:
-- the user equipment (20) is configured to receive a multi path policy indication, the multi path policy indication either indicating, or being used or interpreted, by the user equipment (20), as an indication to allow the user equipment (20) to apply multi path and/or multi access functionality to at least a first traffic or application category regarding user plane traffic, and to deny the user equipment (20) to apply multi path and/or multi access functionality to at least a second traffic or application category regarding user plane traffic,
- the user equipment (20) is configured to try to apply multi path and/or multi access functionality regarding the first traffic or application category, and to refrain from trying to apply multi path and/or multi access functionality regarding the second traffic or application category,
wherein the multi path policy indication refers to at least one quality-of-service category among a plurality of different quality-of-service categories, wherein regarding a first quality-of-service category the user equipment (20) is allowed to apply multi path and/or multi access functionality, and regarding a second quality-of-service category the user equipment (20) is denied to apply multi path and/or multi access functionality.

10. User equipment (20) as part of or connected or registered to a telecommunications network (100) for providing an enhanced and/or more efficient broadband access functionality within the telecommunications network (100), using multi path and/or multi access functionality for at least one specific traffic or application category, wherein the user equipment (20) is enabled to achieve or to realize network access, to the telecommunications network (100), using
- a first access network (111) or first network access, and/or
-- a second access network (112) or second network access,
wherein the first access network (111) or first network access is or relates to an access network of or connected to or assigned to the telecommunications network (100), especially a mobile communication access network, and wherein the second access network (112) or second network access is or relates to likewise an access network of or connected to or assigned to the telecommunications network (100), especially a fixed line access network,
wherein the user equipment (20) is enabled to exchange user plane traffic with the telecommunications network (100) using at least one service data flow and/or using at least one quality-of-service flow, wherein in order to use multi path and/or multi access functionality for at least one specific traffic or application category, the telecommunications network (100) is configured such that:
- - the user equipment (20) is configured to receive a multi path policy indication, the multi path policy indication either indicating, or being used or interpreted, by the user equipment (20), as an indication to allow the user equipment (20) to apply multi path and/or multi access functionality to at least a first traffic or application category regarding user plane traffic, and to deny the user equipment (20) to apply multi path and/or multi access functionality to at least a second traffic or application category regarding user plane traffic,
- the user equipment (20) is configured to try to apply multi path and/or multi access functionality regarding the first traffic or application category, and to refrain from trying to apply multi path and/or multi access functionality regarding the second traffic or application category,
wherein the multi path policy indication refers to at least one quality-of-service category among a plurality of different quality-of-service categories, wherein regarding a first quality-of-service category the user equipment (20) is allowed to apply multi path and/or multi access functionality, and regarding a second quality-of-service category the user equipment (20) is denied to apply multi path and/or multi access functionality.

11. ATSSS server functionality node or instance (150) or PCF node or instance (160) as part of a telecommunications network (100) for providing an enhanced and/or more efficient broadband access functionality within the telecommunications network (100), using multi path and/or multi access functionality for at least one specific traffic or application category, wherein a user equipment (20) is connected or registered to the telecommunications network (100), wherein the user equipment (100) is enabled to achieve or to realize network access, to the telecommunications network (100), using
- a first access network (111) or first network access, and/or
-- a second access network (112) or second network access,
wherein the first access network (111) or first network access is or relates to an access network of or connected to or assigned to the telecommunications network (100), especially a mobile communication access network, and wherein the second access network (112) or second network access is or relates to likewise an access network of or connected to or assigned to the telecommunications network (100), especially a fixed line access network,
wherein the user equipment (20) is enabled to exchange user plane traffic with the telecommunications network (100) using at least one service data flow and/or using at least one quality-of-service flow, wherein in order to use multi path and/or multi access functionality for at least one specific traffic or application category, the ATSSS server functionality node or instance (150) or the PCF node or instance (160) is configured such that:
-- the ATSSS server functionality node or instance (150) is configured to transmit a multi path policy indication to the user equipment (20), the multi path policy indication either indicating, or being used or interpreted, by the user equipment (20), as an indication to allow the user equipment (20) to apply multi path and/or multi access functionality to at least a first traffic or application category regarding user plane traffic, and to deny the user equipment (20) to apply multi path and/or multi access functionality to at least a second traffic or application category regarding user plane traffic,
- the user equipment (20) is configured to try to apply multi path and/or multi access functionality regarding the first traffic or application category, and to refrain from trying to apply multi path and/or multi access functionality regarding the second traffic or application category,
wherein the multi path policy indication refers to at least one quality-of-service category among a plurality of different quality-of-service categories, wherein regarding a first quality-of-service category the user equipment (20) is allowed to apply multi path and/or multi access functionality, and regarding a second quality-of-service category the user equipment (20) is denied to apply multi path and/or multi access functionality.

12. Program comprising a computer readable program code which, when executed on a computer and/or on a user equipment (20) and/or on an ATSSS server functionality node or instance (150) and/or on a PCF node or instance (160), or in part on the user equipment (20) and/or in part on the ATSSS server functionality node or instance (150) and/or in part on the PCF node or instance (160), causes the computer and/or the user equipment (20) and/or the ATSSS server functionality node or instance (150) and/or the PCF node or instance (160) to perform a method according one of claims 1 to 8.

13. Computer-readable medium comprising instructions which when executed on a computer and/or on a user equipment (20) and/or on an ATSSS server functionality node or instance (150) and/or on a PCF node or instance (160), or in part on the user equipment (20) and/or in part on the ATSSS server functionality node or instance (150) and/or in part on the PCF node or instance (160), causes the computer and/or the user equipment (20) and/or the ATSSS server functionality node or instance (150) and/or the PCF node or instance (160) to perform a method according one of claims 1 to 8.

## Patentansprüche

1. Verfahren zum Bereitstellen einer verbesserten und/oder effizienteren Breitbandzugangsfunktionalität innerhalb eines Telekommunikationsnetzes (100) unter Verwendung einer Mehrpfad- und/oder Mehrfachzugriffsfunktionalität für mindestens eine spezifische Verkehrs- oder Anwendungskategorie, wobei eine Benutzerausrüstung (20) mit dem Telekommunikationsnetz (100) verbunden oder bei dem Telekommunikationsnetz (100) registriert ist, wobei die Benutzerausrüstung (20) in die Lage versetzt wird, einen Netzzugang zu dem Telekommunikationsnetz (100) zu erreichen oder zu realisieren unter Verwendung
- eines ersten Zugangsnetzes (111) oder eines ersten Netzzugangs und/oder
- eines zweiten Zugangsnetzes (112) oder eines zweiten Netzzugangs,
wobei das erste Zugangsnetz (111) oder der erste Netzzugang ein Zugangsnetz, insbesondere ein Mobilkommunikationszugangsnetz, ist oder sich auf ein Zugangsnetz, insbesondere ein Mobilkommunikationszugangsnetz, bezieht, das zu dem Telekommunikationsnetz (100) gehört oder mit dem Telekommunikationsnetz (100) verbunden ist oder dem Telekommunikationsnetz (100) zugewiesen ist, und wobei das zweite Zugangsnetz (112) oder der zweite Netzzugang gleichermaßen ein Zugangsnetz, insbesondere ein Festnetzzugangsnetz, ist oder sich auf ein Zugangsnetz, insbesondere ein Festnetzzugangsnetz, bezieht, das zu dem Telekommunikationsnetz (100) gehört oder mit dem Telekommunikationsnetz (100) verbunden ist oder dem Telekommunikationsnetz (100) zugewiesen ist,
wobei die Benutzerausrüstung (20) in die Lage versetzt wird, Benutzerebenenverkehr mit dem Telekommunikationsnetz (100) unter Verwendung mindestens eines Dienstdatenflusses und/oder unter Verwendung mindestens eines Dienstgüteflusses auszutauschen, wobei das Verfahren, um eine Mehrpfad- und/oder Mehrfachzugriffsfunktionalität für mindestens eine spezifische Verkehrs- oder Anwendungskategorie verwenden zu können, die folgenden Schritte umfasst:
- in einem ersten Schritt empfängt die Benutzerausrüstung (20) eine Mehrpfadrichtlinienangabe, wobei die Mehrpfadrichtlinienangabe entweder angibt, oder durch die Benutzerausrüstung (20) als eine Angabe verwendet oder interpretiert wird, der Benutzerausrüstung (20) zu erlauben, eine Mehrpfad- und/oder Mehrfachzugriffsfunktionalität auf mindestens eine erste Verkehrs- oder Anwendungskategorie bezüglich Benutzerebenenverkehr anzuwenden, und der Benutzerausrüstung (20) zu verweigern, eine Mehrpfad- und/oder Mehrfachzugriffsfunktionalität auf mindestens eine zweite Verkehrs- oder Anwendungskategorie bezüglich Benutzerebenenverkehr anzuwenden,
- in einem zweiten Schritt, im Anschluss an den ersten Schritt, versucht die Benutzerausrüstung (20) wenigstens, eine Mehrpfad- und/oder Mehrfachzugriffsfunktionalität bezüglich der ersten Verkehrs- oder Anwendungskategorie anzuwenden, und unterlässt es zu versuchen, eine Mehrpfad- und/oder Mehrfachzugriffsfunktionalität bezüglich der zweiten Verkehrs- oder Anwendungskategorie anzuwenden,
wobei sich die Mehrpfadrichtlinienangabe auf mindestens eine Dienstgütekategorie unter mehreren verschiedenen Dienstgütekategorien bezieht, wobei der Benutzerausrüstung (20) bezüglich einer ersten Dienstgütekategorie erlaubt wird, eine Mehrpfad- und/oder Mehrfachzugriffsfunktionalität anzuwenden, und der Benutzerausrüstung (20) bezüglich einer zweiten Dienstgütekategorie verweigert wird, eine Mehrpfad- und/oder Mehrfachzugriffsfunktionalität anzuwenden.

2. Verfahren nach Anspruch 1, wobei die Mehrpfadrichtlinienangabe einen Verweis auf die mindestens eine erste Verkehrs- oder Anwendungskategorie bezüglich Benutzerebenenverkehr umfasst und keinen Verweis auf die mindestens eine zweite Verkehrs- oder Anwendungskategorie bezüglich Benutzerebenenverkehr umfasst, oder
wobei die Mehrpfadrichtlinienangabe einen Verweis auf die mindestens eine zweite Verkehrs- oder Anwendungskategorie bezüglich Benutzerebenenverkehr umfasst und keinen Verweis auf die mindestens eine erste Verkehrs- oder Anwendungskategorie bezüglich Benutzerebenenverkehr umfasst.

3. Verfahren nach einem der vorangehenden Ansprüche, wobei die Mehrpfadrichtlinienangabe mindestens eine Anwendungsidentifikationsinformation umfasst, wobei sich die mindestens eine Anwendungsidentifikationsinformation insbesondere auf eine oder mehrere Anwendungen bezieht, die in der Benutzerausrüstung (20) verwendet werden können, wobei sich insbesondere die Anwendungsidentifikationsinformation entweder auf die mindestens eine erste Verkehrs- oder Anwendungskategorie bezüglich Benutzerebenenverkehr oder auf die mindestens eine zweite Verkehrs- oder Anwendungskategorie bezüglich Benutzerebenenverkehr bezieht.

4. Verfahren nach einem der vorangehenden Ansprüche, wobei die mehreren verschiedenen Dienstgütekategorien 3GPP-Dienstgütekategorien sind.

5. Verfahren nach einem der vorangehenden Ansprüche, wobei die Benutzerausrüstung (20) eine kundenseitige Ausrüstung oder eine Heim-Gateway-Vorrichtung ist, wobei die Benutzerausrüstung (20) mindestens eine mit der Benutzerausrüstung (20) verbundene Client-Vorrichtung (21, 22) bedient.

6. Verfahren nach einem der vorangehenden Ansprüche, wobei das Telekommunikationsnetz (100) einen ATSSS (Access Traffic Steering, Splitting and Switching)-Serverfunktionalitätsknoten oder eine ATSSS-Serverfunktionalitätsinstanz (150) umfasst, wobei der ATSSS-Serverfunktionalitätsknoten oder die ATSSS-Serverfunktionalitätsinstanz (150) die Mehrpfadrichtlinienangabe als Teil mindestens einer entsprechenden Nachricht (203) an die Benutzerausrüstung (20) sendet.

7. Verfahren nach einem der vorangehenden Ansprüche, wobei das Telekommunikationsnetz (100) einen PCF (Policy Control Function)-Knoten oder eine PCF-Instanz (160) umfasst, wobei
- falls die Benutzerausrüstung (20) versucht, eine Mehrpfad- und/oder Mehrfachzugriffsfunktionalität bezüglich Benutzerebenenverkehr unter Verwendung mindestens einer weiteren Nachricht (204) anzuwenden - der ATSSS-Serverfunktionalitätsknoten oder die ATSSS-Serverfunktionalitätsinstanz (150) mindestens eine Information bezüglich der Verwendung einer Mehrpfad- und/oder Mehrfachzugriffsfunktionalität durch die Benutzerausrüstung (20) empfängt und eine entsprechende weitere Information (205) an den PCF-Knoten oder die PCF-Instanz (160) sendet.

8. Verfahren nach einem der vorangehenden Ansprüche, wobei mittels des PCF-Knotens oder der PCF-Instanz (160) entschieden wird, ob die Verwendung einer Mehrpfad- und/oder Mehrfachzugriffsfunktionalität bezüglich Benutzerebenenverkehr, der durch die Benutzerausrüstung (20) angefordert wird, erlaubt ist oder nicht, wobei bezüglich diese Entscheidung dieselbe Richtlinie, die in der Mehrpfadrichtlinienangabe enthalten ist, angewendet wird, um eine Mehrpfad- und/oder Mehrfachzugriffsfunktionalität bezüglich Benutzerebenenverkehr in Bezug auf die erste Verkehrs- oder Anwendungskategorie und/oder in Bezug auf die zweite Verkehrs- oder Anwendungskategorie zu erlauben oder zu verweigern.

9. Telekommunikationsnetz (100) zum Bereitstellen einer verbesserten und/oder effizienteren Breitbandzugangsfunktionalität innerhalb des Telekommunikationsnetzes (100) unter Verwendung einer Mehrpfad- und/oder Mehrfachzugriffsfunktionalität für mindestens eine spezifische Verkehrs- oder Anwendungskategorie, wobei eine Benutzerausrüstung (20) mit dem Telekommunikationsnetz (100) verbunden oder bei dem Telekommunikationsnetz (100) registriert ist, wobei die Benutzerausrüstung (20) in die Lage versetzt wird, einen Netzzugang zu dem Telekommunikationsnetz (100) zu erreichen oder zu realisieren unter Verwendung
- eines ersten Zugangsnetzes (111) oder eines ersten Netzzugangs, und/oder
- eines zweiten Zugangsnetzes (112) oder eines zweiten Netzzugangs,
wobei das erste Zugangsnetz (111) oder der erste Netzzugang ein Zugangsnetz, insbesondere ein Mobilkommunikationszugangsnetz, ist oder sich auf ein Zugangsnetz, insbesondere ein Mobilkommunikationszugangsnetz, bezieht, das zu dem Telekommunikationsnetz (100) gehört oder mit dem Telekommunikationsnetz (100) verbunden ist oder dem Telekommunikationsnetz (100) zugewiesen ist, und wobei das zweite Zugangsnetz (112) oder der zweite Netzzugang gleichermaßen ein Zugangsnetz, insbesondere ein Festnetzzugangsnetz, ist oder sich auf ein Zugangsnetz, insbesondere ein Festnetzzugangsnetz, bezieht, das zu dem Telekommunikationsnetz (100) gehört oder mit dem Telekommunikationsnetz (100) verbunden ist oder dem Telekommunikationsnetz (100) zugewiesen ist,
wobei die Benutzerausrüstung (20) in die Lage versetzt wird, Benutzerebenenverkehr mit dem Telekommunikationsnetz (100) unter Verwendung mindestens eines Dienstdatenflusses und/oder unter Verwendung mindestens eines Dienstgüteflusses auszutauschen, wobei das Telekommunikationsnetz (100), um eine Mehrpfad- und/oder Mehrfachzugriffsfunktionalität für mindestens eine spezifische Verkehrs- oder Anwendungskategorie verwenden zu können, so eingerichtet ist, dass:
- die Benutzerausrüstung (20) dafür eingerichtet ist, eine Mehrpfadrichtlinienangabe zu empfangen, wobei die Mehrpfadrichtlinienangabe entweder angibt, oder durch die Benutzerausrüstung (20) als eine Angabe verwendet oder interpretiert wird, der Benutzerausrüstung (20) zu erlauben, eine Mehrpfad- und/oder Mehrfachzugriffsfunktionalität auf mindestens eine erste Verkehrs- oder Anwendungskategorie bezüglich Benutzerebenenverkehr anzuwenden, und der Benutzerausrüstung (20) zu verweigern, eine Mehrpfad- und/oder Mehrfachzugriffsfunktionalität auf mindestens eine zweite Verkehrs- oder Anwendungskategorie bezüglich Benutzerebenenverkehr anzuwenden,
- die Benutzerausrüstung (20) dafür eingerichtet ist zu versuchen, eine Mehrpfad- und/oder Mehrfachzugriffsfunktionalität bezüglich der ersten Verkehrs- oder Anwendungskategorie anzuwenden, und es zu unterlassen zu versuchen, eine Mehrpfad- und/oder Mehrfachzugriffsfunktionalität bezüglich der zweiten Verkehrs- oder Anwendungskategorie anzuwenden,
wobei sich die Mehrpfadrichtlinienangabe auf mindestens eine Dienstgütekategorie unter mehreren verschiedenen Dienstgütekategorien bezieht, wobei der Benutzerausrüstung (20) bezüglich einer ersten Dienstgütekategorie erlaubt wird, eine Mehrpfad- und/oder Mehrfachzugriffsfunktionalität anzuwenden, und der Benutzerausrüstung (20) bezüglich einer zweiten Dienstgütekategorie verweigert wird, eine Mehrpfad- und/oder Mehrfachzugriffsfunktionalität anzuwenden.

10. Benutzerausrüstung (20), die Teil eines Telekommunikationsnetzes (100) ist oder mit einem Telekommunikationsnetz (100) verbunden ist oder bei einem Telekommunikationsnetz (100) registriert ist, zum Bereitstellen einer verbesserten und/oder effizienteren Breitbandzugangsfunktionalität innerhalb des Telekommunikationsnetzes (100) unter Verwendung einer Mehrpfad- und/oder Mehrfachzugriffsfunktionalität für mindestens eine spezifische Verkehrs- oder Anwendungskategorie, wobei die Benutzerausrüstung (20) in die Lage versetzt wird, einen Netzzugang zu dem Telekommunikationsnetz (100) zu erreichen oder zu realisieren unter Verwendung
- eines ersten Zugangsnetzes (111) oder eines ersten Netzzugangs, und/oder
- eines zweiten Zugangsnetzes (112) oder eines zweiten Netzzugangs,
wobei das erste Zugangsnetz (111) oder der erste Netzzugang ein Zugangsnetz, insbesondere ein Mobilkommunikationszugangsnetz, ist oder sich auf ein Zugangsnetz, insbesondere ein Mobilkommunikationszugangsnetz, bezieht, das zu dem Telekommunikationsnetz (100) gehört oder mit dem Telekommunikationsnetz (100) verbunden ist oder dem Telekommunikationsnetz (100) zugewiesen ist, und wobei das zweite Zugangsnetz (112) oder der zweite Netzzugang gleichermaßen ein Zugangsnetz, insbesondere ein Festnetzzugangsnetz, ist oder sich auf ein Zugangsnetz, insbesondere ein Festnetzzugangsnetz, bezieht, das zu dem Telekommunikationsnetz (100) gehört oder mit dem Telekommunikationsnetz (100) verbunden ist oder dem Telekommunikationsnetz (100) zugewiesen ist,
wobei die Benutzerausrüstung (20) in die Lage versetzt wird, Benutzerebenenverkehr mit dem Telekommunikationsnetz (100) unter Verwendung mindestens eines Dienstdatenflusses und/oder unter Verwendung mindestens eines Dienstgüteflusses auszutauschen, wobei das Telekommunikationsnetz (100), um eine Mehrpfad- und/oder Mehrfachzugriffsfunktionalität für mindestens eine spezifische Verkehrs- oder Anwendungskategorie verwenden zu können, so eingerichtet ist, dass:
- die Benutzerausrüstung (20) dafür eingerichtet ist, eine Mehrpfadrichtlinienangabe zu empfangen, wobei die Mehrpfadrichtlinienangabe entweder angibt, oder durch die Benutzerausrüstung (20) als eine Angabe verwendet oder interpretiert wird, der Benutzerausrüstung (20) zu erlauben, eine Mehrpfad- und/oder Mehrfachzugriffsfunktionalität auf mindestens eine erste Verkehrs- oder Anwendungskategorie bezüglich Benutzerebenenverkehr anzuwenden, und der Benutzerausrüstung (20) zu verweigern, eine Mehrpfad- und/oder Mehrfachzugriffsfunktionalität auf mindestens eine zweite Verkehrs- oder Anwendungskategorie bezüglich Benutzerebenenverkehr anzuwenden,
- die Benutzerausrüstung (20) dafür eingerichtet ist zu versuchen, eine Mehrpfad- und/oder Mehrfachzugriffsfunktionalität bezüglich der ersten Verkehrs- oder Anwendungskategorie anzuwenden, und es zu unterlassen zu versuchen, eine Mehrpfad- und/oder Mehrfachzugriffsfunktionalität bezüglich der zweiten Verkehrs- oder Anwendungskategorie anzuwenden,
wobei sich die Mehrpfadrichtlinienangabe auf mindestens eine Dienstgütekategorie unter mehreren verschiedenen Dienstgütekategorien bezieht, wobei der Benutzerausrüstung (20) bezüglich einer ersten Dienstgütekategorie erlaubt wird, eine Mehrpfad- und/oder Mehrfachzugriffsfunktionalität anzuwenden, und der Benutzerausrüstung (20) bezüglich einer zweiten Dienstgütekategorie verweigert wird, eine Mehrpfad- und/oder Mehrfachzugriffsfunktionalität anzuwenden.

11. ATSSS-Serverfunktionalitätsknoten oder ATSSS-Serverfunktionalitätsinstanz (150) oder PCF-Knoten oder PCF-Instanz (160) als Teil eines Telekommunikationsnetzes (100) zum Bereitstellen einer verbesserten und/oder effizienteren Breitbandzugangsfunktionalität innerhalb des Telekommunikationsnetzes (100) unter Verwendung einer Mehrpfad- und/oder Mehrfachzugriffsfunktionalität für mindestens eine spezifische Verkehrs- oder Anwendungskategorie, wobei eine Benutzerausrüstung (20) mit dem Telekommunikationsnetz (100) verbunden oder bei dem Telekommunikationsnetz (100) registriert ist, wobei die Benutzerausrüstung (20) in die Lage versetzt wird, einen Netzzugang zu dem Telekommunikationsnetz (100) zu erreichen oder zu realisieren unter Verwendung
- eines ersten Zugangsnetzes (111) oder eines ersten Netzzugangs und/oder
- eines zweiten Zugangsnetzes (112) oder eines zweiten Netzzugangs,
wobei das erste Zugangsnetz (111) oder der erste Netzzugang ein Zugangsnetz, insbesondere ein Mobilkommunikationszugangsnetz, ist oder sich auf ein Zugangsnetz, insbesondere ein Mobilkommunikationszugangsnetz, bezieht, das zu dem Telekommunikationsnetz (100) gehört oder mit dem Telekommunikationsnetz (100) verbunden ist oder dem Telekommunikationsnetz (100) zugewiesen ist, und wobei das zweite Zugangsnetz (112) oder der zweite Netzzugang gleichermaßen ein Zugangsnetz, insbesondere ein Festnetzzugangsnetz, ist oder sich auf ein Zugangsnetz, insbesondere ein Festnetzzugangsnetz, bezieht, das zu dem Telekommunikationsnetz (100) gehört oder mit dem Telekommunikationsnetz (100) verbunden ist oder dem Telekommunikationsnetz (100) zugewiesen ist,
wobei die Benutzerausrüstung (20) in die Lage versetzt wird, Benutzerebenenverkehr mit dem Telekommunikationsnetz (100) unter Verwendung mindestens eines Dienstdatenflusses und/oder unter Verwendung mindestens eines Dienstgüteflusses auszutauschen, wobei der ATSSS-Serverfunktionalitätsknoten oder die ATSSS-Serverfunktionalitätsinstanz (150) oder der PCF-Knoten oder die PCF-Instanz (160), um eine Mehrpfad- und/oder Mehrfachzugriffsfunktionalität für mindestens eine spezifische Verkehrs- oder Anwendungskategorie verwenden zu können, so eingerichtet ist, dass:
- der ATSSS-Serverfunktionalitätsknoten oder die ATSSS-Serverfunktionalitätsinstanz (150) dafür eingerichtet ist, eine Mehrpfadrichtlinienangabe an die Benutzerausrüstung (20) zu senden, wobei die Mehrpfadrichtlinienangabe entweder angibt, oder durch die Benutzerausrüstung (20) als eine Angabe verwendet oder interpretiert wird, der Benutzerausrüstung (20) zu erlauben, eine Mehrpfad- und/oder Mehrfachzugriffsfunktionalität auf mindestens eine erste Verkehrs- oder Anwendungskategorie bezüglich Benutzerebenenverkehr anzuwenden, und der Benutzerausrüstung (20) zu verweigern, eine Mehrpfad- und/oder Mehrfachzugriffsfunktionalität auf mindestens eine zweite Verkehrs- oder Anwendungskategorie bezüglich Benutzerebenenverkehr anzuwenden,
- die Benutzerausrüstung (20) dafür eingerichtet ist zu versuchen, eine Mehrpfad- und/oder Mehrfachzugriffsfunktionalität bezüglich der ersten Verkehrs- oder Anwendungskategorie anzuwenden, und es zu unterlassen zu versuchen, eine Mehrpfad- und/oder Mehrfachzugriffsfunktionalität bezüglich der zweiten Verkehrs- oder Anwendungskategorie anzuwenden,
wobei sich die Mehrpfadrichtlinienangabe auf mindestens eine Dienstgütekategorie unter mehreren verschiedenen Dienstgütekategorien bezieht, wobei der Benutzerausrüstung (20) bezüglich einer ersten Dienstgütekategorie erlaubt wird, eine Mehrpfad- und/oder Mehrfachzugriffsfunktionalität anzuwenden, und der Benutzerausrüstung (20) bezüglich einer zweiten Dienstgütekategorie verweigert wird, eine Mehrpfad- und/oder Mehrfachzugriffsfunktionalität anzuwenden.

12. Programm, umfassend einen computerlesbaren Programmcode, der, wenn er auf einem Computer und/oder in einer Benutzerausrüstung (20) und/oder in einem ATSSS-Serverfunktionalitätsknoten oder einer ATSSS-Serverfunktionalitätsinstanz (150) und/oder in einem PCF-Knoten oder einer PCF-Instanz (160) oder teilweise in der Benutzerausrüstung (20) und/oder teilweise in dem ATSSS-Serverfunktionalitätsknoten oder der ATSSS-Serverfunktionalitätsinstanz (150) und/oder teilweise in dem PCF-Knoten oder der PCF-Instanz (160) ausgeführt wird, den Computer und/oder die Benutzerausrüstung (20) und/oder den ATSSS-Serverfunktionalitätsknoten oder die ATSSS-Serverfunktionalitätsinstanz (150) und/oder den PCF-Knoten oder die PCF-Instanz (160) veranlasst, ein Verfahren nach einem der Ansprüche 1 bis 8 durchzuführen.

13. Computerlesbares Medium, umfassend Instruktionen, die, wenn sie auf einem Computer und/oder in einer Benutzerausrüstung (20) und/oder in einem ATSSS-Serverfunktionalitätsknoten oder einer ATSSS-Serverfunktionalitätsinstanz (150) und/oder in einem PCF-Knoten oder einer PCF-Instanz (160) oder teilweise in der Benutzerausrüstung (20) und/oder teilweise in dem ATSSS-Serverfunktionalitätsknoten oder der ATSSS-Serverfunktionalitätsinstanz (150) und/oder teilweise in dem PCF-Knoten oder der PCF-Instanz (160) ausgeführt werden, den Computer und/oder die Benutzerausrüstung (20) und/oder den ATSSS-Serverfunktionalitätsknoten oder die ATSSS-Serverfunktionalitätsinstanz (150) und/oder den PCF-Knoten oder die PCF-Instanz (160) veranlassen, ein Verfahren nach einem der Ansprüche 1 bis 8 durchzuführen.

## Revendications

1. Procédé permettant de fournir une fonctionnalité d'accès à large bande améliorée et/ou plus efficace au sein d'un réseau de télécommunications (100), au moyen d'une fonctionnalité de trajets multiples et/ou d'accès multiples pour au moins une catégorie de trafic ou d'application spécifique, dans lequel un équipement d'utilisateur (20) est connecté ou enregistré sur le réseau de télécommunications (100), l'équipement d'utilisateur (20) étant en mesure d'obtenir ou de réaliser un accès au réseau, au réseau de télécommunications (100), au moyen de
- un premier réseau d'accès (111) ou un premier accès au réseau, et/ou
- un second réseau d'accès (112) ou un second accès au réseau, dans lequel le premier réseau d'accès (111) ou le premier accès au réseau est ou se rapporte à un réseau d'accès du réseau de télécommunications (100), ou à un réseau d'accès connecté à celui-ci ou affecté à celui-ci, en particulier un réseau d'accès de communication mobile, et dans lequel le second réseau d'accès (112) ou le second accès au réseau est ou se rapporte également à un réseau d'accès du réseau de télécommunications (100), ou à un réseau d'accès connecté à celui-ci ou affecté à celui-ci, en particulier un réseau d'accès à ligne fixe,
dans lequel l'équipement d'utilisateur (20) est en mesure d'échanger un trafic du plan d'utilisateur avec le réseau de télécommunications (100) en utilisant au moins un flux de données de service et/ou au moins un flux de qualité de service, dans lequel, afin d'utiliser une a fonctionnalité de trajets multiples et/ou d'accès multiples pour au moins une catégorie de trafic ou d'application spécifique, le procédé comprend les étapes suivantes :
- dans une première étape, l'équipement d'utilisateur (20) reçoit une indication de politique de trajets multiples, l'indication de politique de trajets multiples indiquant de, ou étant utilisée ou interprétée, par l'équipement d'utilisateur (20), comme une indication pour, soit autoriser l'équipement d'utilisateur (20) à appliquer une fonctionnalité de trajets multiples et/ou d'accès multiples à au moins une première catégorie de trafic ou d'application concernant le trafic du plan d'utilisateur, soit refuser à l'équipement d'utilisateur (20) d'appliquer une fonctionnalité de trajets multiples et/ou d'accès multiples à au moins une seconde catégorie de trafic ou d'application concernant le trafic du plan d'utilisateur,
- dans une seconde étape, subséquente à la première étape, l'équipement d'utilisateur (20) essaie au moins d'appliquer une fonctionnalité de trajets multiples et/ou d'accès multiples en ce qui concerne la première catégorie de trafic ou d'application, et s'abstient d'essayer d'appliquer une fonctionnalité de trajets multiples et/ou d'accès multiples en ce qui concerne la seconde catégorie de trafic ou d'application,
dans lequel l'indication de politique de trajets multiples fait référence à au moins une catégorie de qualité de service parmi une pluralité de catégories de qualité de service différentes, dans lequel, en ce qui concerne une première catégorie de qualité de service, l'équipement d'utilisateur (20) est autorisé à appliquer une fonctionnalité de trajets multiples et/ou d'accès multiples, et dans lequel, en ce qui concerne une seconde catégorie de qualité de service, l'équipement d'utilisateur (20) se voit refuser l'application d'une fonctionnalité de trajets multiples et/ou d'accès multiples.

2. Procédé selon la revendication 1, dans lequel l'indication de politique de trajets multiples comprend une référence à l'au moins une première catégorie de trafic ou d'application en ce qui concerne le trafic du plan d'utilisateur, et ne comprend pas de référence à l'au moins une seconde catégorie de trafic ou d'application en ce qui concerne le trafic du plan d'utilisateur, ou
dans lequel l'indication de politique de trajets multiples comprend une référence à l'au moins une seconde catégorie de trafic ou d'application en ce qui concerne le trafic du plan d'utilisateur, et ne comprend pas de référence à l'au moins une première catégorie de trafic ou d'application en ce qui concerne le trafic du plan d'utilisateur.

3. Procédé selon l'une des revendications précédentes, dans lequel l'indication de politique de trajets multiples comprend au moins une information d'identification d'application, l'au moins une information d'identification d'application étant notamment liée à une ou une pluralité d'applications pouvant être utilisées sur l'équipement d'utilisateur (20), dans lequel en particulier l'information d'identification d'application fait référence soit à l'au moins une première catégorie de trafic ou d'application en ce qui concerne le trafic du plan d'utilisateur, soit à l'au moins une seconde catégorie de trafic ou d'application en ce qui concerne le trafic du plan d'utilisateur.

4. Procédé selon l'une des revendications précédentes, dans lequel la pluralité de catégories de qualité de service différentes sont des catégories de qualité de service 3GPP.

5. Procédé selon l'une des revendications précédentes, dans lequel l'équipement d'utilisateur (20) est un équipement de local client ou un dispositif de passerelle domestique, l'équipement d'utilisateur (20) desservant au moins un dispositif client (21, 22) connecté à l'équipement d'utilisateur (20).

6. Procédé selon l'une des revendications précédentes, dans lequel le réseau de télécommunication (100) comprend un noeud ou une instance de fonctionnalité de serveur d'orientation, de division et de commutation du trafic d'accès (Access Traffic Steering, Splitting and Switching, ATSSS) (150), dans lequel le noeud ou l'instance de fonctionnalité de serveur ATSSS (150) transmet l'indication de politique de trajets multiples à l'équipement d'utilisateur (20) dans le cadre d'au moins un message correspondant (203).

7. Procédé selon l'une des revendications précédentes, dans lequel le réseau de télécommunication (100) comprend un noeud ou une instance de fonction de commande de politique (Policy Control Function, PCF) (160), dans lequel - au cas où l'équipement d'utilisateur (20) tente d'appliquer une fonctionnalité de trajets multiples et/ou d'accès multiples au trafic du plan d'utilisateur, à l'aide d'au moins un autre message (204) - le noeud ou l'instance de fonctionnalité de serveur ATSSS (150) reçoit au moins une information concernant l'utilisation de la fonctionnalité de trajets multiples et/ou d'accès multiples par l'équipement d'utilisateur (20), et transmet une autre information correspondante (205) au noeud ou à l'instance PCF (160).

8. Procédé selon l'une des revendications précédentes, dans lequel, au moyen du noeud ou de l'instance PCF (160), il est décidé si l'utilisation de la fonctionnalité de trajets multiples et/ou d'accès multiples en ce qui concerne le trafic du plan d'utilisateur, demandée par l'équipement d'utilisateur (20), est autorisée ou non, dans lequel en ce qui concerne cette décision, la même politique que celle comprise dans l'indication de politique à trajets multiples est appliquée pour autoriser ou refuser la fonctionnalité de trajets multiples et/ou d'accès multiples en ce qui concerne le trafic du plan d'utilisateur relativement à la première catégorie de trafic ou d'application et/ou relativement à la seconde catégorie de trafic ou d'application.

9. Réseau de télécommunications (100) permettant de fournir une fonctionnalité d'accès à large bande améliorée et/ou plus efficace au sein d'un réseau de télécommunications (100), au moyen d'une fonctionnalité de trajets multiples et/ou d'accès multiples pour au moins une catégorie de trafic ou d'application spécifique, dans lequel un équipement d'utilisateur (20) est connecté ou enregistré sur le réseau de télécommunications (100), dans lequel l'équipement utilisateur (20) est en mesure d'obtenir ou de réaliser un accès au réseau, au réseau de télécommunications (100), au moyen de
- un premier réseau d'accès (111) ou un premier accès au réseau, et/ou
- un second réseau d'accès (112) ou un second accès au réseau,
dans lequel le premier réseau d'accès (111) ou le premier accès au réseau est ou se rapporte à un réseau d'accès du réseau de télécommunications (100), ou à un réseau d'accès connecté à celui-ci ou affecté à celui-ci, en particulier un réseau d'accès de communication mobile, et dans lequel le second réseau d'accès (112) ou le second accès au réseau est ou se rapporte également à un réseau d'accès du réseau de télécommunications (100), ou à un réseau d'accès connecté à celui-ci ou affecté à celui-ci, en particulier un réseau d'accès à ligne fixe,
dans lequel l'équipement d'utilisateur (20) est en mesure d'échanger un trafic du plan d'utilisateur avec le réseau de télécommunications (100) en utilisant au moins un flux de données de service et/ou au moins un flux de qualité de service, dans lequel, afin d'utiliser la fonctionnalité de trajets multiples et/ou d'accès multiples pour au moins une catégorie de trafic ou d'application spécifique, le réseau de télécommunications (100) est configuré de telle sorte que :
- l'équipement d'utilisateur (20) est configuré pour recevoir une indication de politique de trajets multiples, l'indication de politique de trajets multiples indiquant de, ou étant utilisée ou interprétée, par l'équipement d'utilisateur (20), comme une indication pour, soit autoriser l'équipement d'utilisateur (20) à appliquer une fonctionnalité de trajets multiples et/ou d'accès multiples à au moins une première catégorie de trafic ou d'application en ce qui concerne le trafic du plan d'utilisateur, soit refuser à l'équipement d'utilisateur (20) d'appliquer une fonctionnalité de trajets multiples et/ou d'accès multiples à au moins une seconde catégorie de trafic ou d'application en ce qui concerne le trafic du plan d'utilisateur,
- l'équipement d'utilisateur (20) est configuré pour essayer d'appliquer une fonctionnalité de trajets multiples et/ou d'accès multiples en ce qui concerne la première catégorie de trafic ou d'application, et pour s'abstenir d'essayer d'appliquer une fonctionnalité de trajets multiples et/ou d'accès multiples en ce qui concerne la seconde catégorie de trafic ou d'application,
dans lequel l'indication de politique de trajets multiples fait référence à au moins une catégorie de qualité de service parmi une pluralité de catégories de qualité de service différentes, dans lequel, en ce qui concerne une première catégorie de qualité de service, l'équipement d'utilisateur (20) est autorisé à appliquer une fonctionnalité de trajets multiples et/ou d'accès multiples, et dans lequel, en ce qui concerne une seconde catégorie de qualité de service, l'équipement d'utilisateur (20) se voit refuser l'application d'une fonctionnalité de trajets multiples et/ou d'accès multiples.

10. Équipement d'utilisateur (20) faisant partie d'un réseau de télécommunications (100) ou connecté ou enregistré sur celui-ci, pour fournir une fonctionnalité d'accès à large bande améliorée et/ou plus efficace au sein du réseau de télécommunications (100), au moyen d'une fonctionnalité de trajets multiples et/ou d'accès multiples pour au moins une catégorie de trafic ou d'application spécifique, dans lequel l'équipement d'utilisateur (20) est en mesure d'obtenir ou de réaliser un accès au réseau, au réseau de télécommunications (100) au moyen de
- un premier réseau d'accès (111) ou premier accès au réseau, et/ou
- un second réseau d'accès (112) ou un second accès au réseau,
dans lequel le premier réseau d'accès (111) ou le premier accès au réseau est ou se rapporte à un réseau d'accès du réseau de télécommunications (100), ou à un réseau d'accès connecté à celui-ci ou affecté à celui-ci, en particulier un réseau d'accès de communication mobile, et dans lequel le second réseau d'accès (112) ou le second accès au réseau est ou se rapporte également à un réseau d'accès du réseau de télécommunications (100), ou à un réseau d'accès connecté à celui-ci ou affecté à celui-ci, en particulier un réseau d'accès à la ligne fixe,
dans lequel l'équipement d'utilisateur (20) est en mesure d'échanger un trafic du plan d'utilisateur avec le réseau de télécommunications (100) en utilisant au moins un flux de données de service et/ou au moins un flux de qualité de service, dans lequel, afin d'utiliser la fonctionnalité de trajets multiples et/ou d'accès multiples pour au moins une catégorie de trafic ou d'application spécifique, le réseau de télécommunications (100) est configuré de telle sorte que :
- l'équipement d'utilisateur (20) est configuré pour recevoir une indication de politique de trajets multiples, l'indication de politique de trajets multiples indiquant de, ou étant utilisée ou interprétée, par l'équipement d'utilisateur (20), comme une indication pour, soit autoriser l'équipement d'utilisateur (20) à appliquer une fonctionnalité de trajets multiples et/ou d'accès multiples à au moins une première catégorie de trafic ou d'application en ce qui concerne le trafic du plan d'utilisateur, soit refuser à l'équipement d'utilisateur (20) d'appliquer une fonctionnalité de trajets multiples et/ou d'accès multiples à au moins une seconde catégorie de trafic ou d'application en ce qui concerne le trafic du plan d'utilisateur,
- l'équipement d'utilisateur (20) est configuré pour essayer d'appliquer une fonctionnalité de trajets multiples et/ou d'accès multiples en ce qui concerne la première catégorie de trafic ou d'application, et pour s'abstenir d'essayer d'appliquer une fonctionnalité de trajets multiples et/ou d'accès multiples en ce qui concerne la seconde catégorie de trafic ou d'application,
dans lequel l'indication de politique de trajets multiples fait référence à au moins une catégorie de qualité de service parmi une pluralité de catégories de qualité de service différentes, dans lequel, en ce qui concerne une première catégorie de qualité de service, l'équipement d'utilisateur (20) est autorisé à appliquer une fonctionnalité de trajets multiples et/ou d'accès multiples, et dans lequel, en ce qui concerne une seconde catégorie de qualité de service, l'équipement d'utilisateur (20) se voit refuser l'application d'une fonctionnalité de trajets multiples et/ou d'accès multiples.

11. Noeud ou instance de fonctionnalité de serveur ATSSS (150) ou noeud ou instance PCF (160) faisant partie d'un réseau de télécommunications (100) pour fournir une fonctionnalité d'accès à large bande améliorée et/ou plus efficace au sein du réseau de télécommunications (100), au moyen d'une fonctionnalité de trajets multiples et/ou d'accès multiples pour au moins une catégorie de trafic ou d'application spécifique, dans lequel un équipement d'utilisateur (20) est connecté ou enregistré sur le réseau de télécommunications (100), dans lequel l'équipement d'utilisateur (100) est en mesure d'atteindre ou de réaliser un accès au réseau, au réseau de télécommunications (100), au moyen de
- un premier réseau d'accès (111) ou un premier accès au réseau, et/ou
- un second réseau d'accès (112) ou un second accès au réseau,
dans lequel le premier réseau d'accès (111) ou le premier accès au réseau est ou se rapporte à un réseau d'accès du réseau de télécommunications (100), ou à un réseau d'accès connecté à celui-ci ou affecté à celui-ci, en particulier un réseau d'accès de communication mobile, et dans lequel le second réseau d'accès (112) ou le second accès au réseau est ou se rapporte également à un réseau d'accès du réseau de télécommunications (100), ou à un réseau d'accès connecté à celui-ci ou affecté à celui-ci, en particulier un réseau d'accès à ligne fixe,
dans lequel l'équipement d'utilisateur (20) est en mesure d'échanger un trafic du plan d'utilisateur avec le réseau de télécommunications (100) en utilisant au moins un flux de données de service et/ou au moins un flux de qualité de service, dans lequel, afin d'utiliser la fonctionnalité de trajets multiples et/ou d'accès multiples pour au moins une catégorie de trafic ou d'application spécifique, le noeud ou l'instance de fonctionnalité de serveur ATSSS (150) ou le noeud ou l'instance PCF (160) est configuré(e) de telle sorte que :
- le noeud ou l'instance de fonctionnalité de serveur ATSSS (150) est configuré(e) pour transmettre une indication de politique de trajets multiples à l'équipement d'utilisateur (20), l'indication de politique de trajets multiples indiquant de, ou étant utilisée ou interprétée, par l'équipement d'utilisateur (20), comme une indication pour, soit autoriser l'équipement d'utilisateur (20) à appliquer une fonctionnalité de trajets multiples et/ou d'accès multiples à au moins une première catégorie de trafic ou d'application en ce qui concerne le trafic du plan d'utilisateur, soit refuser à l'équipement d'utilisateur (20) d'appliquer une fonctionnalité de trajets multiples et/ou d'accès multiples à au moins une seconde catégorie de trafic ou d'application en ce qui concerne le trafic du plan d'utilisateur,
- l'équipement d'utilisateur (20) est configuré pour essayer d'appliquer une fonctionnalité de trajets multiples et/ou d'accès multiples en ce qui concerne la première catégorie de trafic ou d'application, et pour s'abstenir d'essayer d'appliquer une fonctionnalité de trajets multiples et/ou d'accès multiples en ce qui concerne la seconde catégorie de trafic ou d'application,
dans lequel l'indication de politique de trajets multiples fait référence à au moins une catégorie de qualité de service parmi une pluralité de catégories de qualité de service différentes, dans lequel, en ce qui concerne une première catégorie de qualité de service, l'équipement d'utilisateur (20) est autorisé à appliquer une fonctionnalité de trajets multiples et/ou d'accès multiples, et dans lequel, en ce qui concerne une seconde catégorie de qualité de service, l'équipement d'utilisateur (20) se voit refuser l'application d'une fonctionnalité de trajets multiples et/ou d'accès multiples.

12. Programme comprenant un code de programme lisible par ordinateur qui, lorsqu'il est exécuté sur un ordinateur et/ou sur un équipement d'utilisateur (20) et/ou sur un noeud ou une instance de fonctionnalité de serveur ATSSS (150) et/ou sur un noeud ou une instance PCF (160), ou en partie sur l'équipement d'utilisateur (20) et/ou en partie sur le noeud ou l'instance de fonctionnalité de serveur ATSSS (150) et/ou en partie sur le noeud ou l'instance PCF (160), amène l'ordinateur et/ou l'équipement d'utilisateur (20) et/ou le noeud ou l'instance de fonctionnalité de serveur ATSSS (150) et/ou le noeud ou l'instance PCF (160) à effectuer un procédé selon l'une des revendications 1 à 8 .

13. Support lisible par ordinateur comprenant des instructions qui, lorsqu'elles sont exécutées sur un ordinateur et/ou sur un équipement d'utilisateur (20) et/ou sur un noeud ou une instance de fonctionnalité de serveur ATSSS (150) et/ou sur un noeud ou une instance PCF (160), ou en partie sur l'équipement d'utilisateur (20) et/ou en partie sur le noeud ou l'instance de fonctionnalité de serveur ATSSS (150) et/ou en partie sur le noeud ou l'instance PCF (160), amènent l'ordinateur et/ou l'équipement d'utilisateur (20) et/ou le noeud ou l'instance de fonctionnalité de serveur ATSSS (150) et/ou le noeud ou l'instance PCF (160) à effectuer un procédé selon l'une des revendications 1 à 8.
